(19) **Europäisches Patentamt**
**European Patent Office**
**Office européen des brevets**

(11) **EP 2 067 368 B1**

(12) **EUROPEAN PATENT SPECIFICATION**

(45) Date of publication and mention
of the grant of the patent:
**03.10.2018 Bulletin 2018/40**

(51) Int Cl.:
**H04W 24/10** *(2009.01)*    **H04L 1/00** *(2006.01)*
**H04W 28/06** *(2009.01)*

(21) Application number: **07825532.0**

(22) Date of filing: **22.08.2007**

(86) International application number:
**PCT/IB2007/003268**

(87) International publication number:
**WO 2008/023267 (28.02.2008 Gazette 2008/09)**

(54) **METHOD AND APPARATUS FOR TRANSMITTING STATUS DATA**

VERFAHREN UND VORRICHTUNG ZUM SENDEN VON STATUSDATEN

PROCÉDÉ ET APPAREIL POUR TRANSMETTRE DES DONNÉES D'ÉTAT

(84) Designated Contracting States:
**AT BE BG CH CY CZ DE DK EE ES FI FR GB GR
HU IE IS IT LI LT LU LV MC MT NL PL PT RO SE
SI SK TR**

(30) Priority: **22.08.2006 DE 102006039309**

(43) Date of publication of application:
**10.06.2009 Bulletin 2009/24**

(73) Proprietor: **QUALCOMM Incorporated
San Diego, CA 92121-1714 (US)**

(72) Inventors:
• **BRUNINGHAUS, Karsten
38259 Salzgitter (DE)**
• **FRANZEN, Michael
46395 Bocholt (DE)**
• **SCHMIDT, Malte
90537 Feucht (DE)**
• **SCHWARK, Uwe
28832 Achim (DE)**

(74) Representative: **Potter, Julian Mark
WP Thompson
138 Fetter Lane
London EC4A 1BT (GB)**

(56) References cited:
**WO-A-02/093757**    **GB-A- 2 415 870**
**US-A1- 2005 281 226**    **US-A1- 2006 165 188**

• **SOO-YONG JEON ET AL: "Energy-efficient
channel quality indication (CQI) feedback
scheme for UMTS high-speed downlink packet
access" VEHICULAR TECHNOLOGY
CONFERENCE, 2005. VTC-2005-FALL. 2005 IEEE
62ND DALLAS, TX, USA 25-28 SEPT., 2005,
PISCATAWAY, NJ, USA, IEEE, 28 September 2005
(2005-09-28), pages 245-249, XP010878459 ISBN:
0-7803-9152-7**
• **EDDY KWON (SAMSUNG): "CQI report and
scheduling procedure (R1-051045)" 3RD
GENERATION PARTNERSHIP PROJECT (3GPP);
TECHNICAL SPECIFICATION GROUP (TSG)
RADIO ACCESS NETWORK (RAN); WORKING
GROUP 1 (WG1), XX, XX, 10 October 2005
(2005-10-10), pages 1-4, XP002441317**
• **SAMSUNG: "Principles of CQI report
(R2-0601021)" 3GPP TSG RAN2 NR 52, 27/3-31/3
2006, [Online] 31 March 2006 (2006-03-31), pages
1-4, XP002475262 Athens, Greece Retrieved from
the Internet: URL:www.3gpp.org> [retrieved on
2008-04-04]**
• **SOO-YONG JEON ET AL: "Channel adaptive CQI
reporting schemes for HSDPA systems" IEEE
COMMUNICATIONS LETTERS, IEEE SERVICE
CENTER, PISCATAWAY, NJ, US, vol. 10, no. 6,
June 2006 (2006-06), pages 459-461,
XP002469906 ISSN: 1089-7798**

- BAOWEI JI ET AL: "Analysis of optimal use of CQI channels for OFDMA systems" VEHICULAR TECHNOLOGY CONFERENCE, 2005. VTC-2005-FALL. 2005 IEEE 62ND DALLAS, TX, USA 25-28 SEPT., 2005, PISCATAWAY, NJ, USA,IEEE, 25 September 2005 (2005-09-25), pages 1604-1608, XP010878715 ISBN: 0-7803-9152-7

- PHILIPS: "CQI Signalling Occasions" 3GPP TSG RAN WG1 MEETING NR. 45, [Online] 12 May 2006 (2006-05-12), pages 1-2, XP002475263 Shanghai, China Retrieved from the Internet: URL:www.3gpp.org> [retrieved on 2008-04-04]

**Description**

The present invention relates to a method and an apparatus for transmitting status data relating to a status of at least one communications channel from a group of multiplexed communications channels, which are multiplexed with respect to at least one resource from the resource group of frequency, time, space and code, between a base station and at least one mobile terminal.

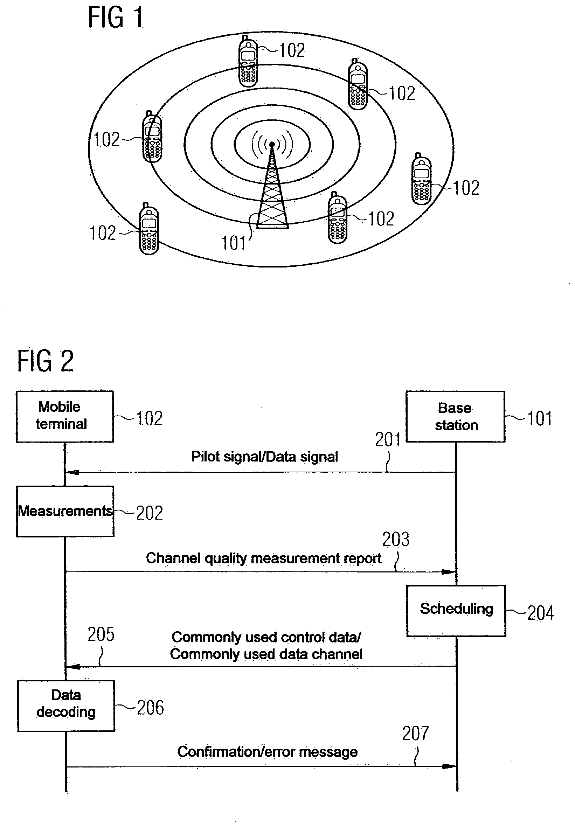

Methods and apparatuses of this type are used predominantly in mobile radiotelephone systems with adaptive resource assignment. Fig. 1 shows the basic scenario. A base station 101 is surrounded by a quantity of mobile terminals 102. In order to configure the data transmission from the base station to the mobile terminal as efficiently as possible, the base station 101 decides dynamically which resources will be used for the transmission of data from the base station 101 to the mobile terminals 102. Depending on the transmission methods used, these resources may be frequencies (frequency division multiple access (FDMA)), time divisions (time division multiple access (TDMA)), codes (code division multiple access (CDMA)), and/or spaces (space division multiple access (SDMA)), or combinations thereof. In the following, any frequency, time, code and/or space resource which can be assigned a mobile terminal independently of other resources - according to the multiple access method adopted - can be called a channel.

To allow efficient allocation of resources to mobile terminals, the base station requires information about the status of the available communications channels. The status data concerning the communications channels, for example in the form of a set of signal-to-interference + noise ratios, can be measured either in the base station 101 or in the mobile terminals 102.

Measurement in the mobile terminals has the advantage that non-reciprocal components of status measurement such as, for example, intercellular interference of neighbouring base stations can, in principle, be correctly detected. A drawback, on the other hand, is the increased complexity of signalling for making the base station aware of the current channel status at the mobile terminals.

A method for transmitting status data concerning the statuses of mobile radiotelephone channels is disclosed, for example, in the document R2-060378 of 3GPP Group TSG RAN WG2 #51 entitled "Scheduler Architecture for LTE DL". The method is reproduced in Fig. 2 and proceeds as follows: the base station 101 initially transmits a pilot signal and/or a data signal to the mobile terminals 102 (step 201) associated with the base station. Each mobile terminal 102 measures the quality of all available channels on the basis of the pilot signal and/or the data signal (step 202). The mobile terminals 102 transmit the measured data in the form of a channel quality measurement report to the base station 101 with which they are associated (step 203). On the basis of the channel quality measurement reports and other factors such as, for example, the QoS (quality of service) - requirements, queue lengths, etc., a scheduler located on the base station determines which communications channel in the next scheduling period is allocated to which mobile terminal (step 204). The classified mobile terminals are informed of the decision, and information required for decoding the data are transmitted via a commonly used control channel (step 205). The actual data are transmitted via the assigned communications channels to the mobile terminals. After the decoding of the transmitted data in step 206, the mobile terminals transmit either a confirmation or an error message to the base station in step 207.

A fundamental problem with this method is the incidence and volume of data, i.e. the quantity of status data which describe the statuses of the communications channels and are exchanged between the mobile terminals and the base station. If it is assumed that each mobile terminal sends back status data measured for all potential channels, then the quantity of status data sent to the base station scales to the number of users and the number of measured channels. The signalling complexity associated therewith may be very high, depending on the number of mobile terminals currently associated with the base station and the number of multiplexed channels, and this reduces the remaining capacity of the system for actual data transmission accordingly.

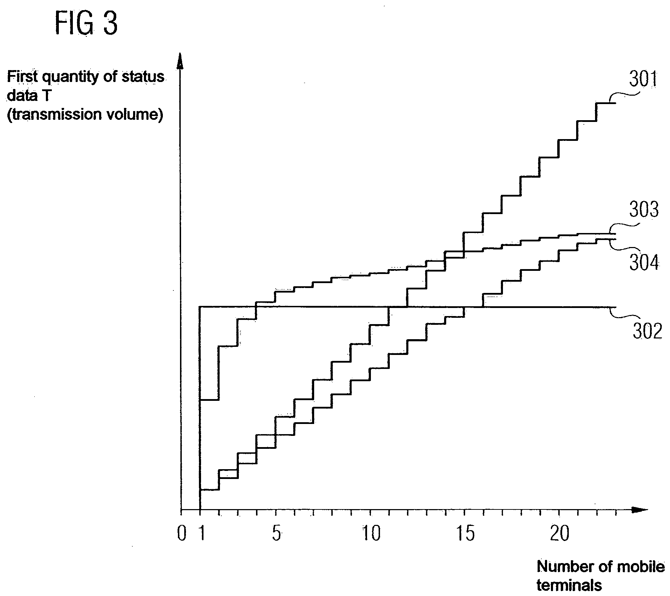

A possible method of restricting the quantity of status data to be transmitted is mentioned in the document R1-060228 of the 3GPP working group TSG RAN WG1 entitled "Sensitivity of DL/UL Performance to CQI Compression with Text Proposal". That document describes a method with which each mobile terminal returns only status data about the best x channels to the base station. Although this procedure reduces the quantity of status data transmitted to the base station per mobile terminal, the transmission volume of status data is linearly scaled to the number of mobile terminals. A linear relationship between the transmission volume and the number of mobile terminals of this type is described, for example, by the curve 301 shown in Fig. 3.

Patent applications GB2415870 and US20050281226 as well as the IEEE publication "Energy-Efficient Channel Quality Indication (CQI) Feedback Scheme for UMTS high-Speed Downlink Packet Access" by Soo-Yong Jeon and Don-Ho Cho disclose methods to reduce the reporting of status data by limiting the number of UEs reporting or the channels to report on. 3GPP TSG-RAN WG1 Meeting #42bis Tdoc R1-, with title "CQI report and scheduling procedure" by Samsung, discloses a method of reporting "Entire CQI" or "Chunk CQI" based on QoS, ,mobility, network load, UE class or frequency selectivity.

Starting from the aforementioned prior art, an object of an embodiment in accordance with the present invention is to provide an improved method and an improved apparatus for transmitting status data.

This object may be achieved by a method having the features of claim 1, by an apparatus having the features of claim 8 and by a computer program product having the features of claim 15.

Advantageous configurations and particular embodiments of the invention are described in the subclaims.

An advantage of this method is that initially the quantity of mobile terminals from which status information is requested is determined and may be or preferably be restricted to those mobile terminals for which data is available for transmission to the base station. In addition, the quantity of status data which is to be detected for each terminal and to be sent back to the base station may be or preferably be made dependent on the number of currently selected mobile terminals so that just enough status data for efficient adaptive channel assignment is available for the base station. The second quantity of status data which is to be sent back from each selected mobile terminal can have a tendency to decrease, the more terminals selected in the first step. Conversely, the second quantity of status data may be or preferably be increased, the fewer terminals contained in the selection.

The inventors also found that, in a first approximation, a large part of the positive effect achievable by an adaptive resource assignment is already achieved when the total quantity of status data available in the scheduler exceeds a threshold T. This first quantity of required status data can correspond to a predetermined value. The method becomes even more efficient if T is established as a function of the number of currently selected mobile terminals.

With knowledge of this first quantity of required status data and, or preferably, a list of the selected mobile terminals and, or preferably, the respective current requirements, for example with respect to the data rate, a second quantity of status data is determined, namely that which the respective selected mobile terminals are to deliver, so that the base station receives the first quantity of status data in total. This second quantity may be identical or different for each of the selected mobile terminals.

The step of determining a first quantity of status data may comprise the steps of determining a third quantity of status data which is to be detected for each communications channel, determining a quantity of communications channels for which status data are to be detected, and determining a first quantity of status data by multiplication of the third quantity by the quantity of communications channels for which status data are to be detected. Similarly, in the step of determining a first quantity of status data, the first quantity of status data can be determined as a function of the number of mobile terminals to which data are to be transmitted from the base station or which are associated with the base station.

The mobile terminal may already be aware of this first quantity of status data, for example, in that this first quantity of status data has been permanently stored on the mobile terminal during installation. In an embodiment, however, the method comprises the step of transmitting the first quantity of status data from the base station to at least one mobile terminal associated with the base station. This has the advantage that the base station can inform the at least one mobile terminal of the first quantity of status data in the operating phase, so that the base station can change the first quantity of status data dynamically at regular or irregular time intervals. The mobile terminal can independently calculate the second quantity of status data on the basis of the first quantity notified to it as well as further information, such as, for example, a list of the selected mobile terminals.

In an embodiment, in the step of selecting at least one mobile terminal associated with the base station, at least one mobile terminal associated with the base station is selected as a function of the mobile terminals of the base station to which data are to be transmitted. Particularly if data which is to be transmitted to a mobile terminal are present at the base station, it may be advantageous for the base station to possess information as to how the mobile terminal assesses the status of the communications channels available. It may therefore be advantageous, in particular, to select the mobile terminals to which data is to be transmitted.

In an embodiment, the method comprises the step of transmitting the result of selection in the step of selecting at least one mobile terminal associated with the base station from the base station to at least one mobile terminal associated with the base station. This may afford the advantage that the selected mobile terminals are advised of the result of selection and can react accordingly.

In the step of selecting at least one mobile terminal associated with the base station, a plurality of mobile terminals may be, or preferably be selected, in order to increase the potential gain in capacity by an adaptive resource assignment.

In an embodiment, the step of determining a second quantity of status data which is to be delivered by the at least one selected mobile terminal, is carried out by the base station. The second quantity status data may be or preferably be determined as a function of the first quantity of status data and the result of the step of selection of at least one mobile terminal associated with the base station. The second quantity of status data can be identical or different for all selected terminals. The sum of all second quantities of status data of all selected terminals generally corresponds to the first quantity of status data. The second quantity of status data determined by the base station may be, or preferably be, transmitted from the base station to the at least one selected mobile terminal in a step of transmitting the second quantity of status data.

Alternatively it is possible that the step of determining a second quantity of status data which is to be delivered by the at least one selected mobile terminal, is carried out by the at least one selected mobile terminal. This may afford the advantage that the second quantity of status data does not have to be calculated at the base station.

In an embodiment, the step of determining a second quantity of status data comprises the step of dividing the first quantity of status data by the number of selected mobile terminals. This embodiment may have the advantage that the second quantity is determined very easily. Each selected mobile terminal delivers the same quantity of status data.

In an alternative embodiment, a respective second quantity of status data is determined in the step of determining a second quantity of status data for each selected mobile terminal. This may have the advantage that some mobile terminals can deliver more status data than others. This is desirable, for example, if the status of the communications channels on a mobile terminal is particularly important, for example because a particularly large amount of, particularly time-critical or particularly important data is to be transmitted to this mobile terminal.

In the step of determining a second quantity of status data, the second quantity of status data may be, or preferably be determined as a function of the type of data which is to be transmitted to the selected mobile terminal, for which the second quantity of status data is determined. Particularly if the data to be transmitted to the mobile terminal have very high QoS requirements because they are, for example, data of a video telephony conference it may be advantageous to demand a particularly large number of status data from the mobile terminals which are to receive such data.

An embodiment of the method comprises the step of transmitting at least one weighting factor, which is allocated to a respective mobile terminal, from the base station to the at least one selected mobile terminal. The weighting factors may be, or preferably are, transmitted as a list of numbers in a binary representation with a previously established resolution (at least one bit) and sequence, an entry from this list being allocated to each associated terminal. Terminals which have not been selected by the base station in the step of selecting at least one mobile terminal associated with the base station are allocated the weighting factor "0". The second quantity of status data may be, or preferably be calculated in the terminal.

An embodiment of the method comprises the step of ascertaining to which mobile terminal transmitted data refer, as a function of the transmission sequence of transmitted data. This may afford the advantage that, during the transmission of data such as, for example, result of selection, second quantity and/or weighting factor, it is not necessary to transmit the terminal to which the transmitted data relate during each transfer. Instead, the reference can be seen from the sequence of transmitted data.

In an embodiment, the step of determining a second quantity of status data comprises the steps of forming a product of a weighting factor which is allocated to the mobile terminal from which the second quantity of status data is to be delivered, and the first quantity of status data and dividing the product by the sum of the weighting factors which are allocated to the selected mobile terminals. The result of the division in the previously established form may be, or preferably be, rounded up or down to the nearest integer.

In a particular embodiment, a method according to the invention comprises the further step of ascertaining at least one channel (response channel) for the transmission of the second quantity of detected status data from the at least one selected mobile terminal to the base station on the basis of the result of the selection of the at least one mobile terminal associated with the base station and/or on the basis of the first quantity of status data and/or on the basis of the second quantity of status data to be delivered by the at least one selected mobile terminal.

In a simple embodiment, all back channels for all selected mobile terminals are identical and access takes place randomly, for example using the "slotted Aloha" protocol. In an embodiment, however, the respective back channels for each selected mobile terminal may, or preferably, differ. This may have the advantage that not all mobile terminals use the same channel. This allows faster, better and/or more reliable transmission of status data to the base station, if required.

Particular advantages are afforded if in the step of ascertaining at least one channel (response channel) for transmitting the second quantity of detected status data from the at least one selected mobile terminal to the base station, at least one channel for the transmission of the second quantity of detected status data to the base station is ascertained on the basis of the second quantity of status data, if or, preferably if, the second quantity of status data is not identical for all selected mobile terminals.

In an embodiment, an individual response channel is determined for the respective status data referring to an individual measured communications channel. At least one response channel index which is clearly linked to a response channel may be, or preferably be, calculated in each selected mobile terminal on the basis of the position of the mobile terminal in the list of transmitted weighting factors and the determined second quantity of status data for each selected mobile terminal.

The number of channels for transmitting the second quantity of detected status data from the at least one selected mobile terminal to the base station is reduced by using common coding and/or common error detection.

In a further conceivable embodiment, in the step of determining at least one channel for transmitting the second quantity of detected status data from the at least one selected mobile terminal to the base station, a predetermined part of the back channels is reserved exclusively for a terminal while a different part is used jointly by all selected mobile terminals.

Viewed from another aspect the invention also comprises an apparatus for transmitting status data relating to a status of at least one communications channel from a group of multiplexed communications channels, which are multiplexed with respect to at least one resource from the resource group of frequency, time, space and code, between a base station and at least one mobile terminal. According to an embodiment of the invention the apparatus comprises means for selecting at least one mobile terminal associated with the base station means for determining a first quantity of status data which are to be detected for controlling data transmission via the at least one communications channel, means for determining a second quantity of status data, which is to be delivered by the at least one selected mobile terminal on the basis of the selection of the at least one mobile terminal and the first quantity of status data, the second quantity being smaller than or equal to the first quantity, means for detecting the second quantity of status data and means for transmitting the second quantity of detected status data from the at least one selected mobile terminal to the base station.

An apparatus of this type may have the advantage that it is set up initially to determine a first quantity of status data, namely the quantity of status data which the base station requires to be able to meaningfully allocate resources to mobile terminals. The apparatus also allows a subset of mobile terminals to be selected from the full set of mobile terminals associated with the base station in order to acquire status data only from these selected mobile terminals. This may afford the advantage that the signalling complexity can be optimised. The base station requests only as much status data as it actually requires. The base station intentionally selects mobile terminals for the delivery of status data. In this way, the number of mobile terminals which deliver status data can be restricted, and it is possible to select the mobile terminals delivering data which are particularly relevant to the current situation.

The means for determining a first quantity of status data comprises, or preferably comprises, means for determining a third quantity of status data which is to be detected for each communications channel, means for determining a quantity of communications channels for which status data are to be detected, and means for determining a first quantity of status data by multiplication of the third quantity by the quantity of communications channels for which status data are to be detected.

In an embodiment, the means for determining a first quantity of status data is set up to determine the first quantity of status data as a function of the number of mobile terminals to which data are to be transmitted from the base station or which are associated with the base station. Since the first quantity of status data is determined as a function of the number of mobile terminals, an advantage may be afforded that it can be determined better how much information the base station requires in order to meaningfully allocate resources to mobile terminals.

The apparatus comprises, or preferably comprises, means for transmitting the first quantity of status data from the base station to at least one mobile terminal associated with the base station. Since the mobile terminals receive the first quantity of status data from the base station, the first quantity does not have to be stored permanently on the mobile terminal. It is thus possible that the base station determines the first quantity dynamically on the basis of the current situation and then informs the mobile terminals of it.

In an embodiment, the means for selecting at least one mobile terminal associated with the base station is set up to make the selection of at least one mobile terminal associated with the base station as a function of the mobile terminals of the base station to which data are to be transmitted. The inventors found that it is particularly important to know, from the mobile terminals, the channel statuses to which data are to be transmitted in the current situation. The present embodiment may have the advantage that status data are demanded, in particular, from those mobile terminals to which data is to be transmitted at present. This ensures that, if possible, only status data which are relevant at the present time are transmitted.

The apparatus comprises, or preferably comprises, means for transmitting the result of selection in means for selecting at least one mobile terminal associated with the base station from the base station to at least one mobile terminal associated with the base station. This affords the advantage that the mobile terminals can be informed that they have been selected to deliver status data. On the basis of the result of selection the mobile terminals can deliver the demanded status data.

In an embodiment, the means for selecting at least one mobile terminal associated with the base station is set up to select a plurality of mobile terminals. This may afford an advantage that a plurality of mobile terminals can be intended to deliver a respective second quantity of status data to the base station in order thus to make the first quantity of status data available.

In an embodiment, the base station comprises means for determining a second quantity of status data. This may have the advantage that the mobile terminals themselves do not have to determine the second quantity of status data as the second quantity of status data is determined at the base station.

The apparatus comprises, or preferably comprises, means for transmitting the second quantity of status data, which is to be delivered by the at least one selected mobile terminal, from the base station to the at least one selected mobile terminal. As a result, the mobile terminal does not have to determine the second quantity itself but is informed of the second quantity of status data by the base station.

In an embodiment, the at least one mobile terminal comprises means for determining a second quantity of status data. This may afford the advantage that the mobile terminals themselves determine the second quantity of status data. As a result, the base station does not have to determine the second quantity, and transfer of the second quantity can be dispensed with.

The means for determining a second quantity of status data comprises, or preferably comprises, means for dividing the first quantity of status data by the number of selected mobile terminals. This dividing means represents a simple but effective means of distributing the delivery of the necessary first quantity of status data to the selected mobile terminals.

In an embodiment, the means for determining a second quantity of status data is set up to determine a second respective quantity of status data for each selected mobile terminal. In this way, the means allows different quantities of status data to be demanded from the individual mobile terminals. This may be particularly advantageous if the individual mobile terminals are of differing importance in the current situation, for example because data of differing urgency are to be delivered to them.

In an embodiment, each selected mobile terminal comprises respective means for determining a second quantity of status data. This allows each mobile terminal to determine itself the second quantity of status data.

The means for determining a second quantity of status data is set up, or may be preferably set up, to determine the second quantity of status data as a function of the type of data to be transmitted to the selected mobile terminal for which the second quantity of status data is determined. This may afford the advantage that many status data can be requested, in particular, from the mobile terminals to which very extensive or very urgent data are to be transmitted such as, for example, video telephony data.

In an embodiment, the apparatus comprises means for transmitting at least one weighting factor, which is allocated to a respective mobile terminal, from the base station to the at least one selected mobile terminal.

The apparatus comprises, or preferably comprises, means for ascertaining to which mobile terminal transmitted data refer, as a function of the transmission sequence of transmitted data. This means that it is no longer necessary, during each transmission of data, also to transmit information as to which mobile terminals the data refer. Instead, the reference can be determined on the basis of the transmission sequence.

The means for determining a second quantity of status data comprises, or preferably comprises, means for forming a product of a weighting factor which is allocated to the mobile terminal from which the second quantity of status data is to be delivered, and the first quantity of status data and means for dividing the product by the sum of the weighting factors which are allocated to the selected mobile terminals. These means allow simple but effective distribution of the first quantity of status data over the selected mobile terminals, wherein a uniform distribution does not have to take place but it is possible to demand different quantities of status data from the individual mobile terminals so that the mobile terminals which are particularly important deliver a particularly large amount of status data.

In an embodiment, the apparatus comprises means for determining at least one channel for the transmission of the second quantity of detected status data from the at least one selected mobile terminal to the base station on the basis of the result of the selection of the at least one mobile terminal associated with the base station and/or on the basis of the first quantity of status data. This means allows the second quantity of detected status data not to be transmitted via the same respective channel from the mobile terminals to the base station but allows the second quantity of detected status data to be transmitted via differing channels from the mobile terminals to the base station. This may be worthwhile, in particular, if very extensive status data is to be transmitted or if status data is to be transmitted from a very large number of mobile terminals to the base station.

The apparatus comprises, or preferably comprises, means for determining at least one channel for transmitting the second quantity of detected status data from the at least one selected mobile terminal to the base station on the basis of the second quantity of status data. This may afford the advantage that if, for example, the second quantity of status data is quite large, it can be transmitted via more than one channel from the mobile terminal to the base station. This allows faster and/or more efficient transmission.

In an embodiment, the apparatus comprises means for reducing the number of channels for transmitting the second quantity of detected status data to the base station by using common coding and/or common error detection.

Viewed from a further aspect the invention further comprises a base station which is set up to carry out the method according to the aspect of the invention.

Similarly, viewed from a yet further aspect the invention comprises a mobile terminal which is set up to carry out the method according to the aspect of the invention.

A person skilled in the art can easily see that the means of the apparatus according to an embodiment of the invention can be arranged at differing locations. In particular, it is possible for some means to be located at the base station whereas other means are arranged on one of more mobile terminals. For example, the means can be embodied as software components of a distributed system.

An embodiment of the invention may therefore additionally comprise a system which is set up to carry out the method according to an aspect of the invention or which comprises an apparatus according to an aspect of the invention for transmitting status data.

An embodiment of the invention further comprises a Computer program product which comprises a computer-readable medium and a computer program stored therein, wherein the computer program is stored in the form of a sequence of statuses which corresponds to commands which are set up to be processed by a data processing means of a data processing arrangement so that an apparatus according to an embodiment of the invention is formed or a method according to an embodiment of the invention is carried out.

Configurations and further details of embodiments of the present invention will be described hereinafter by means of various embodiments with reference to the drawings.

Fig. 1 shows a scenario in which the method according to an embodiment of the invention could be adopted.

Fig. 2 shows a protocol for transmitting status data.

Fig. 3 compares the scaling of the transmission volume of status data when the number of mobile terminals is increased as opposed to the scaling of the transmission volume of status data when using a method according to the invention.

Fig. 4 shows a first embodiment of a method according to the invention.

Fig. 5 shows a second embodiment of a method according to the invention.

Fig. 6 shows an example of a result of selection, which is transmitted from the base station to the selected mobile terminals.

Fig. 7 shows a second embodiment of a result of selection which is transmitted from the base station to the mobile terminals.

Fig. 8 shows an example of how the mobile terminal number 1 completes the selection result list shown in Fig. 7.

Fig. 9 shows a third example of a result of selection which is transmitted from the base station to the mobile terminals.

Fig. 10 shows how the mobile terminal number 3 completes the selection result list from Fig. 9.

Fig. 11 shows an embodiment of an apparatus according to the invention for transmitting status data.

Referring to Fig. 3, the first quantity of status data will initially be discussed. Curve 301 shows how the transmission volume of status data increases during an increase of the number of mobile terminals prompted to detect status data, when the method according to document R1-060228 is used. A linear relationship between the number of selected mobile terminals and the transmission volume ensues. According to an embodiment of the invention, a first quantity of status data is conceivable which - as shown by curve 302 - is independent of the number of selected mobile terminals. In this case, the second quantity of status data to be delivered by a mobile terminal decreases with the number of mobile terminals. In the simplest case, the second quantity of status data $X$ can be calculated by dividing the first quantity of status data $T$ by the quantity of selected mobile terminals $U$, i.e.

$$X = \frac{T}{U}.$$

In practice, however, a first quantity of status data $T$ which has a slight non-linear dependency on the number of mobile terminals, i.e.

$$T = T (U).$$

may be more advantageous.

In general, the equation $X = f (T, U)$ is obtained. The curve 303 illustrates a conceivable relationship between the first quantity of status data and the number of selected mobile terminals. If only a few mobile terminals have been selected by the base station, the individual mobile terminals deliver a relatively large amount of status data. If many mobile terminals have been selected, the individual mobile terminals make very much less status data available, but the first quantity of status data increases slightly. Alternatively, a form of the type illustrated, for example, by the curve 304 is also conceivable. In this embodiment, the curve initially follows the linearly increasing curve 301. As the number of selected mobile terminals increases, the individual mobile terminals deliver less status data per mobile terminal.

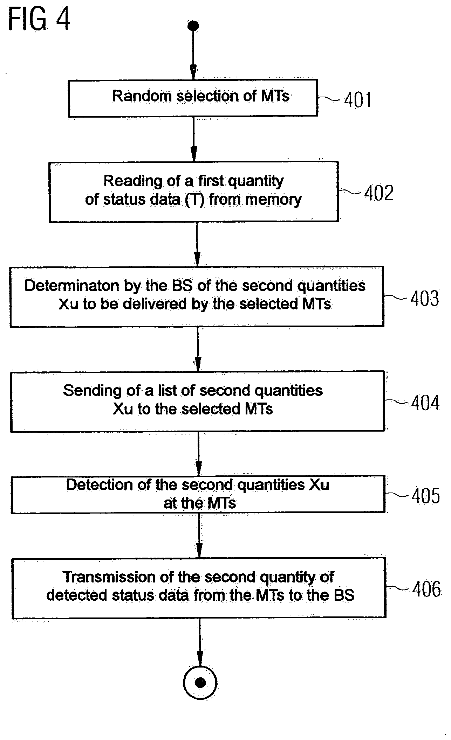

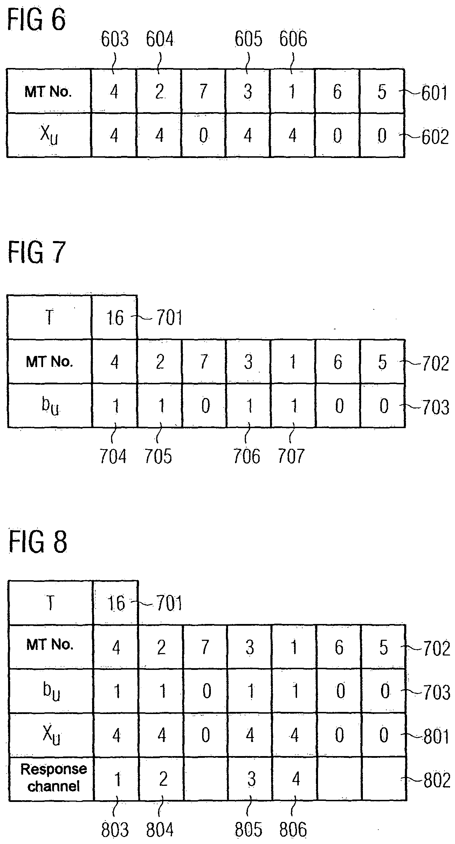

Fig. 4 shows a first simple embodiment of a method according to the invention for transmitting status data. A static first quantity of status data of the type illustrated by the curve 302 is assumed. In step 401, the base station randomly selects mobile terminals (MT) which are associated with the base station. The first quantity of status data is stored permanently on the base station and is read out in step 402. In step 403, the base station (BS) determines the second quantity of status data $X_U$ to be delivered by the selected mobile terminals. In general, this second quantity may be dependant on the terminal, as described by the index u in this embodiment. In step 404, the base station sends a list of second quantities of status data $X_U$ to the selected mobile terminals. An example of such a list is shown in Fig. 6 and will be described hereinafter. After reception of the list at the mobile terminal, the mobile terminal, in step 405, detects the second quantity of status data $X_U$. The mobile terminal transmits this second quantity of detected status data to the base station in step 406.

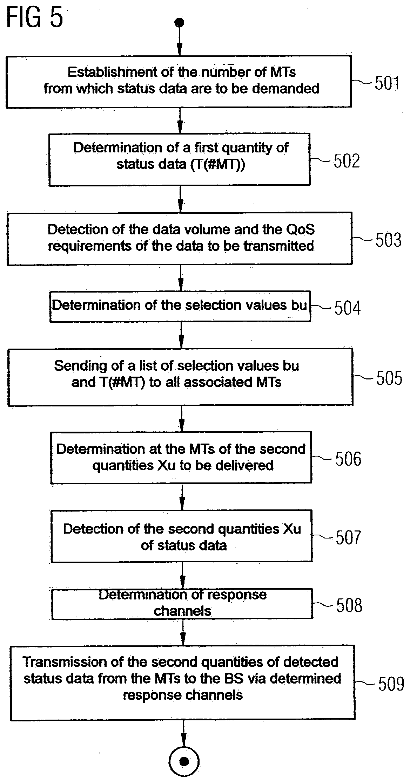

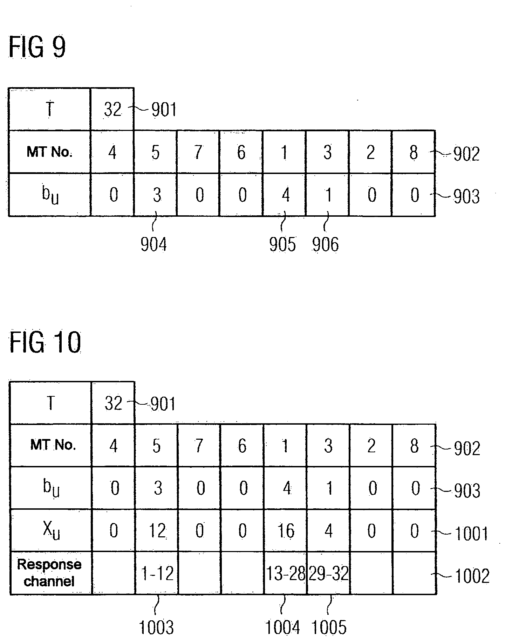

Fig. 5 shows a more complex second embodiment of the method according to the invention for transmitting status data. In step 501, the base station (BS) establishes the number (#MT) of mobile terminals (MT) which are associated with the base station and from which it wishes to receive status data in signal form. These may preferably be all mobile terminals for which data are currently present, or a subset thereof. On the basis of this number (#MT), the base station determines a first quantity of status data (T (#MT)) in step 502. In step 503, the base station detects the extent of data to be sent and the QoS requirements thereof such as, for example, the urgency thereof. In step 504, the base station determines selection values $b_U$. In step 505, the base station sends a list of selection values $b_U$ and the first quantity of status data (T (#MT)) to all associated mobile terminals. Examples of such lists are shown in Fig. 7 and Fig. 9 and will described hereinafter. In step 506, the selected mobile terminals determine the second quantity of status data $X_U$ to be delivered on the basis of this list. The mobile terminals detect this second quantity of status data $X_U$ in step 507. In step 508, the mobile terminals determine response channels on the basis of the received list of selection values $b_U$. The respective mobile terminal transmits the second quantity of detected status data from the mobile terminal to the base station via these determined response channels in step 509.

Fig. 6 shows an example of a list of selection results for second quantities $X_U$, as transmitted to the mobile terminals by the method shown in Fig. 4. The list comprises a first row 601 in which the number of the respective mobile terminal is specified, and a second row 602 which contains the associated second quantities of status data $X_U$. Both rows can, in principle, be transmitted together but it is more efficient always to transmit the second row 602 and only to transmit the first row 601 when a reorganisation of the list is necessitated, for example by cessation or new association of terminals. Instead of transmitting the entire first row 601, corresponding column numbers in the table or list of positions can be explicitly assigned to newly associated mobile terminals. As no change is obtained for all other terminals, they do not have to be informed, so the overall signalling complexity is reduced. List positions of terminals which are no longer associated with the base station can be reoccupied by newly associating terminals. In the example shown in Fig. 6, the mobile terminal No. 4 is prompted to deliver four units of status data, as indicated in column 603. The mobile terminal No. 2 also delivers four units of status data according to column 604, the mobile terminal with No. 3 four status data units according to column 605 and the mobile terminal No. 1 four status data units according to column 606.

Fig. 7 shows an example of a selection result list, as sent to the mobile terminals, for example by the method shown in Fig. 5. This list signals, for example with only a single bit, whether or not a corresponding mobile terminal is to deliver status data. To enable the individual mobile terminals to determine the second quantity of status data $X_U$ to be delivered from this information, it is necessary for the mobile terminals to be informed of the first quantity of status data T. The first quantity of status data T is therefore contained in row 701. Row 702 contains the numbers of the mobile terminals. Here again, this row only actually has to be transmitted when the list is reorganised. Row 703 contains the selection values $b_U$. Columns 704 to 707 indicate that the mobile terminals with numbers 4, 2, 3 and 1 have to deliver status data, or in other words have been selected.

Fig. 8 shows how the mobile terminal No. 1 completes the list shown in Fig. 7. On the basis of the first quantity of status data T shown in row 701 and the selection values $b_U$, as shown in row 703, the mobile terminal No. 1 can calculate the second quantities of status data to be delivered. The results are illustrated in row 801. At the same time, the mobile terminal 1 can determine the response channels on the basis of the selection values $b_U$ as shown in row 703. As a result, the mobile terminal No. 4 sends the second status data via the response channel 1 to the base station, as shown in column 803. As shown in column 804, the mobile terminal No. 2 sends the second quantity of status data detected by it via the response channel 2 to the base station. Column 805 shows that the mobile terminal No. 3 uses the response channel 3. The mobile terminal No. 1 also sends the second quantity of detected status data via the response channel 4 to the base station. More precisely, the calculated values for the response channel to be used are indices to which a corresponding response channel is clearly allocated.

Fig. 9 shows a further example of a selection result list, as sent to the mobile terminals, for example by the method illustrated in Fig. 5. The first quantity of status data T is signalled in row 901. Row 902 contains the numbers of the mobile terminals. Here again, this row only actually needs to be transmitted when the list is reorganised. A difference from Fig. 7 is illustrated in row 903. In the example illustrated, the selection values $b_U$ move not only in the value range $b_U \in \{0, 1\}$, but in the value range $b_U \in \{0, 1, 2, 3, 4\}$. The value 1 could be used, for example, for time-uncritical data such as back up data. A selection value $b_U$ of 2 is suitable, for example, for normal data traffic. A selection value $b_U$ of 3 could be used for video streaming data which have a high real time requirement, and a selection value $b_U$ of 4 is conceivable for video conference data, which do not only have a high real time requirement, but are even more time-critical than video streaming data owing to the interaction between the videoconference participants.

In the example illustrated, a selection value $b_U$ of 3 is allocated to the mobile terminal No. 5 (column 904), a selection value $b_U$ of 4 to the mobile terminal No. 1 (column 905) and a selection value $b_U$ of 1 to the mobile terminal No. 3 (column 906). As the first quantity T, as shown in row 901, and the numbers of the mobile terminals, as shown in row 902, only change rarely in comparison with row 903, it is particularly advantageous to transmit row 901 and row 902 more rarely than row 903. This relationship, which has already been discussed herein before, obviously does not only arise in this embodiment but represents a general possibility for optimising the method.

Fig. 10 shows how the mobile terminal No. 3 completes the received list, as shown in Fig. 9. Only the mobile terminal No. 3 has to fill the list completely in order to be able to determine the response channels, as illustrated in column 1005. The mobile terminal No. 5, for example, would only have to complete the column 1003. The mobile terminal No. 1 would complete column 1003 and 1004. As shown in row · 1001, the mobile terminals can calculate the second quantities $X_U$ from the received selection values $b_U$ and the first quantity T. This takes place by the following formula:

$$X_U = \begin{bmatrix} \dfrac{b_U * T}{U_A} \\ \displaystyle\sum_{k=1} b_K \end{bmatrix},$$

wherein $U_A$ symbolises the number of mobile terminals associated with the base station. In the example illustrated, $U_A$ is 8, as indicated in row 902. As illustrated in row 1001, this formula can be used to calculate that the mobile terminal No. 5 delivers twelve units of status data (column 1003), the mobile terminal No. 1 delivers sixteen units of status data (column 1004) and the mobile terminal No. 3 delivers four units of status data (column 1005). The result of the division is preferably rounded up or down to the nearest integer, if the result is not an integer.

In the present example, the mobile terminals calculate an individual response channel for each unit of status data to be transmitted to the base station (see row 1002). The mobile terminal No. 5 sends the twelve units of status data via the response channels 1 to 12 (column 1003). The mobile terminal No. 1 sends the sixteen units of status data to be delivered via the response channels 13 - 28 (column 1004). The mobile terminal No. 3 uses the response channels 29 - 32 to transmit the four units of status data (column 1005). The numbers of the response channels are only examples. CDMA code numbers or TDMA/FDMA time/frequency division numbers or waiting times on a commonly used channel, for example, may be derived therefrom.

Alternatively to the independent transmission of each unit of status data via an individual response channel, a plurality of units of status data of a single mobile terminal can also be combined, fewer resources generally being required as specific overhead portions, for example for coding and/or error detection, only occur once rather than several times. Consequently, the extent of resources and channels required for transmitting all units of status data of a terminal is no longer scaled linearly with $X_U$. If this dependency is known to all mobile terminals, the calculation of the response channels to be used can be adapted accordingly. In Fig. 10, row 1002, the mobile terminal No. 5 would now require, for example, only ten response channels owing to the increased efficiency, so the entries 1 - 10 could be made in column 1003. The terminal No. 1, for example, is even more efficient and requires only thirteen channels rather than sixteen and therefore occupies the response channels 11 - 23. In this example, the terminal No. 3 cannot be ascribed again in efficiency owing to the already small quantity of status data to be determined, and still requires four channels. The determined response channels for the terminal No. 3 are the channels 24 - 27 in that case.

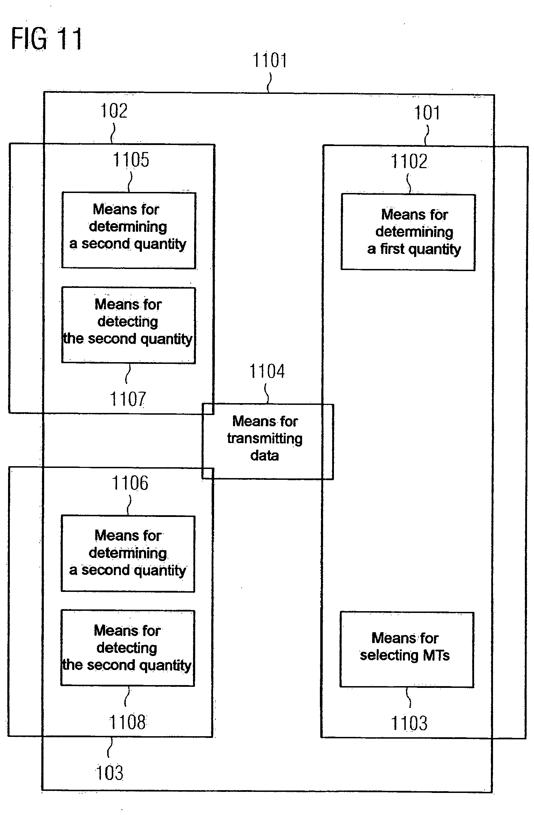

Fig. 11 shows an embodiment of an apparatus for transmitting status data according to the invention. The apparatus 1101 is in distributed form. In the illustrated embodiment, some means are located on the base station 101 while other means are located on the mobile terminals. Two mobile terminals 102, 103 are shown in the example illustrated. According to the invention, the apparatus can relate to only a single mobile terminal or to many - two or more. It is not in any way restrictive to understand that two mobile terminals are assumed in the illustrated example.

In the illustrated embodiment, a means for determining a first quantity 1102 is located on the base station. The first quantity can either be calculated, because it is dependent, on the number of mobile terminals associated with the base station or the number of mobile terminals for which data to be transmitted are instantaneously present at the base station, or can be determined by reading a fixed value T from the memory. Other ways of determining a first quantity are conceivable.

The apparatus also comprises a means for selecting mobile terminals (MT) 1103. In the embodiment, this means is located on the base station 101. Using the means for selecting mobile terminals, the base station selects suitable mobile terminals from the quantity of mobile terminals associated with the base station. These are, or preferably are, the mobile terminals to which data is currently to be transmitted.

The result of the selection of mobile terminals is sent to the mobile terminals as a list by the means for transmitting data 1104. Fig. 7 and Fig. 9 show examples of such lists. In the embodiment, the means for transmitting data 1104 is a distributed component in the sense of a distributed system. It consists of a transmitter and a receiver on the side of the base station and of a transmitter and a receiver on the side of each of the mobile terminals. There is a means for determining a second quantity 1105, 1106 on each of the mobile terminals 102, 103. This means for determining a second quantity calculates the second quantities $X_U$ by the method according to an embodiment of the invention, described hereinbefore. The mobile terminals 102, 103 also comprise means for detecting the second quantity 1107, 1108. This means for detecting the second quantity measures the corresponding status data. After detection, the mobile terminals 102, 103 transmit the status data to base station 101 via the means for transmitting data 1104.

It will be immediately apparent to the person skilled in the art, from the embodiment, that an apparatus according to the invention for transmitting status data is, or preferably is, embodied by generic hardware (CPUs, memory elements, antennas, etc.) in conjunction with software components which are distributed over the base station and the mobile terminals and thus form a distributed system.

The embodiments and drawings should be understood as being purely illustrative and non-restricting. It is possible to combine the features described in the embodiments with one another in different ways in order thus to provide further embodiments which are optimised for the corresponding purpose. Since modifications of this type are immediately apparent to the person skilled in the art, they will be disclosed implicitly by the foregoing description of the embodiments.

For example, the method illustrated in Fig. 4 uses very simple respective ways of carrying out the individual features, while Fig. 5 uses complex respective ways of carrying out the individual features. It is conceivable to provide mixed forms. For example, a method can be simple and yet use a first quantity of status data on the basis of the number of mobile terminals associated with the base station. Similarly, it is possible that a way of carrying out the method simply reads the first quantity of status data T from the memory, but determines the selection data $b_U$ in a complex manner taking into consideration the data to be sent and the QoS requirements thereof. The second quantities $X_U$ to be delivered can be calculated either at the base station or at the mobile terminals. This feature is independent of how the first quantity of status data T and how the selection values $b_U$ have been determined.

In addition, Fig. 10 shows the feature of allowing for QoS requirements when determining the selection values $b_U$ together with an allowance for the second quantities $X_U$ when calculating the response channels. The two features are obviously technically independent of one another and need not occur in combination with one another. Fig. 11 additionally shows that the means for determining a second quantity is located on the mobile terminals. It is obviously also possible to make available embodiments which provide the means for determining a second quantity at the base station. These and many other differing combinations of features are immediately apparent to the person skilled in the art and should therefore deemed to be implicitly disclosed by the foregoing descriptions of the embodiments.

The term "means" is used herein, including in the appended claims, to refer to an include within its scope all possible configurations, arrangements and the like which implement the function or functions defined immediately after each use of the term "means".

## Claims

1. Method for receiving status data relating to a status of at least one communications channel from a group of multiplexed communications channels, which are multiplexed with respect to at least one resource from the resource group of frequency, time, space and code, between a base station (101) and one or more mobile terminals (102), comprising the steps,

   - determining (401; 504), by the base station, at least two mobile terminals associated with the base station,
   - determining a first quantity of status data (402; 502) to be detected for controlling data transmission via the at least one communications channel,
   - determining a second quantity of status data (403; 506) to be delivered by at least one mobile terminal of the determined at least two mobile terminals as a function of: (i) the number of mobile terminals in the determined at least two mobile terminals associated with the base station, and (ii) the first quantity of status data, the second quantity being smaller than or equal to the first quantity, and
   - receiving, by the base station, the second quantity (406; 509) of status data delivered by the at least one mobile terminal.

2. Method according to claim 1, **characterised in that** the step of determining a first quantity of status data (402; 502) comprises the steps of determining a third quantity of status data which is to be detected for each communications channel, determining a quantity of communications channels for which status data are to be detected, and determining a first quantity of status data by multiplication of the third quantity by the quantity of communications channels for which status data are to be detected.

3. Method according to either claim 1 or claim 2, **characterised in that**, in the step of determining a first quantity of status data (402; 502), the first quantity of status data is determined as a function of the number of mobile terminals to which data are to be transmitted from the base station or which are associated with the base station.

4. Method according to at least one of the preceding claims, **characterised by** the step of transmitting the first quantity of status data (505) from the base station to at least one mobile terminal associated with the base station.

5. Method according to at least one of the preceding claims, **characterised in that**, in the step of determining (401; 504) at least two mobile terminals associated with the base station, at least one mobile terminal associated with the base station is selected as a function of the mobile terminals to which data are to be transmitted.

6. Method according to at least one of the preceding claims, **characterised by** the step of transmitting the result of selection (505), in the step of determining at least two mobile terminals associated with the base station, from the base station to at least one mobile terminal associated with the base station.

7. Method according to at least one of the preceding claims, **characterised in that**, in the step of determining (401; 504) at least two mobile terminals associated with the base station, a plurality of mobile terminals are selected.

8. Apparatus for receiving status data relating to a status of at least one communications channel from a group of multiplexed communications channels, which are multiplexed with respect to at least one resource from the resource group of frequency, time, space and code, between a base station (101) and one or more mobile terminals (102, 103), comprising,

- means for selecting (1103) at least two mobile terminals associated with the base station,
- means for determining a first quantity (1102) of status data to be detected for controlling data transmission via the at least one communications channel,
- means for determining a second quantity (1105, 1106) of status data to be delivered by at least one mobile terminal of the selected at least two mobile terminals as a function of: (i) the number of mobile terminals in the selected at least two mobile terminals, and (ii) the first quantity of status data, the second quantity being smaller than or equal to the first quantity, and
- means for receiving the second quantity (1104) of status data delivered by the at least one mobile terminal.

9. Apparatus according to claim 8, **characterised in that** the means for determining a first quantity (1102) of status data comprises

- means for determining a third quantity of status data which is to be detected for each communications channel,
- means for determining a quantity of communications channels for which status data are to be detected, and
- means for determining a first quantity of status data by multiplication of the third quantity by the quantity of communications channels for which status data are to be detected.

10. Apparatus according to either claim 8 or claim 9, **characterised in that** the means for determining a first quantity (1102) of status data is set up to determine the first quantity of status data as a function of the number of mobile terminals to which data are to be transmitted from the base station or which are associated with the base station.

11. Apparatus according to at least one of claims 8 to 10, **characterised by** means for transmitting the first quantity (1104) of status data from the base station to at least one mobile terminal associated with the base station.

12. Apparatus according to at least one of claims 8 to 11, **characterised in that** the means for selecting (1103) at least two mobile terminals associated with the base station is set up to make the selection of at least two mobile terminals associated with the base station as a function of the mobile terminals to which data are to be transmitted.

13. Apparatus according to at least one of claims 8 to 12, **characterised by** means for transmitting the result of selection (1104), in means for selecting at least two mobile terminals associated with the base station, from the base station to at least one mobile terminal associated with the base station.

14. Apparatus according to at least one of claims 8 to 13, **characterised in that** the means for selecting (1103) at least two mobile terminals associated with the base station is set up to select a plurality of mobile terminals.

15. Computer program product which comprises a computer-readable medium and a computer program stored therein, wherein the computer program is stored in the form of a sequence of statuses which corresponds to commands which are set up to be processed by a data processing means of a data processing arrangement so that an apparatus according to at least one of claims 8 to 14 is formed or the method according to at least one of claims 1 to 7 is carried out.

**Patentansprüche**

1. Verfahren zum Empfangen von Zustandsdaten, die sich auf einen Zustand von mindestens einem Kommunikationskanal von einer Gruppe von gemultiplexten Kommunikationskanälen beziehen, die mit Bezug auf mindestens eine Ressource von der Ressourcengruppe Frequenz, Zeit, Raum und Code gemultiplext sind, zwischen einer Basisstation (101) und einem oder mehreren mobilen Endgeräten (102), umfassend die folgenden Schritte:

- Bestimmen (401; 504), durch die Basisstation, von mindestens zwei mobilen Endgeräten, die mit der Basisstation assoziiert sind,
- Bestimmen einer ersten Menge an Zustandsdaten (402; 502), die erfasst werden sollen, um die Datenübertragung über den mindestens einen Kommunikationskanal zu steuern,
- Bestimmen einer zweiten Menge an Zustandsdaten (403; 506), die von mindestens einem mobilen Endgerät der bestimmten mindestens zwei mobilen Endgeräte geliefert werden sollen, in Abhängigkeit von Folgendem: (i) der Zahl an mobilen Endgeräten in den bestimmten mindestens zwei mobilen Endgeräten, die mit der Basisstation assoziiert sind, und (ii) der ersten Menge an Zustandsdaten, wobei die zweite Menge kleiner als oder gleich der ersten Menge ist, und
- Empfangen, durch die Basisstation, der zweiten Menge (406; 509) an Zustandsdaten, die von dem mindestens einen mobilen Endgerät geliefert werden.

2. Verfahren nach Anspruch 1, **dadurch gekennzeichnet, dass** der Schritt des Bestimmens einer ersten Menge an Zustandsdaten (402; 502) die Schritte des Bestimmens einer dritten Menge an Zustandsdaten, die für jeden Kommunikationskanal erfasst werden sollen, des Bestimmens einer Menge an Kommunikationskanälen, für die Zustandsdaten erfasst werden sollen, und des Bestimmens einer ersten Menge an Zustandsdaten durch das Multiplizieren der dritten Menge mit der Menge an Kommunikationskanälen, für die Zustandsdaten erfasst werden sollen, umfasst.

3. Verfahren nach entweder Anspruch 1 oder Anspruch 2, **dadurch gekennzeichnet, dass** in dem Schritt des Bestimmens einer ersten Menge an Zustandsdaten (402; 502) die erste Menge an Zustandsdaten in Abhängigkeit von der Zahl an mobilen Endgeräten, an die Daten von der Basisstation übertragen werden sollen oder die mit der Basisstation assoziiert sind, bestimmt wird.

4. Verfahren nach mindestens einem der vorangehenden Ansprüche, **gekennzeichnet durch** den Schritt des Übertragens der ersten Menge an Zustandsdaten (505) von der Basisstation an mindestens ein mobiles Endgerät, das mit der Basisstation assoziiert ist.

5. Verfahren nach mindestens einem der vorangehenden Ansprüche, **dadurch gekennzeichnet, dass** in dem Schritt des Bestimmens (401; 504) von mindestens zwei mobilen Endgeräten, die mit der Basisstation assoziiert sind, mindestens ein mobiles Endgerät, das mit der Basisstation assoziiert ist, in Abhängigkeit von den mobilen Endgeräten, an die Daten übertragen werden sollen, ausgewählt wird.

6. Verfahren nach mindestens einem der vorangehenden Ansprüche, **gekennzeichnet durch** den Schritt des Übertragens des Ergebnisses der Auswahl (505) in dem Schritt des Bestimmens von mindestens zwei mobilen Endgeräten, die mit der Basisstation assoziiert sind, von der Basisstation zu mindestens einem mobilen Endgerät, das mit der Basisstation assoziiert ist.

7. Verfahren nach mindestens einem der vorangehenden Ansprüche, **dadurch gekennzeichnet, dass** in dem Schritt des Bestimmens (401; 504) von mindestens zwei mobilen Endgeräten, die mit der Basisstation assoziiert sind, eine Vielzahl von mobilen Endgeräten ausgewählt wird.

8. Vorrichtung zum Empfangen von Zustandsdaten, die sich auf einen Zustand von mindestens einem Kommunikationskanal von einer Gruppe von gemultiplexten Kommunikationskanälen beziehen, die mit Bezug auf mindestens eine Ressource von der Ressourcengruppe Frequenz, Zeit, Raum und Code gemultiplext sind, zwischen einer Basisstation (101) und einem oder mehreren mobilen Endgeräten (102, 103), umfassend:

- ein Mittel zum Auswählen (1103) von mindestens zwei mobilen Endgeräten, die mit der Basisstation assoziiert sind,
- ein Mittel zum Bestimmen einer ersten Menge (1102) an Zustandsdaten, die erfasst werden sollen, um die Datenübertragung über den mindestens einen Kommunikationskanal zu steuern,
- ein Mittel zum Bestimmen einer zweiten Menge (1105, 1106) an Zustandsdaten, die von mindestens einem mobilen Endgerät der ausgewählten mindestens zwei mobilen Endgeräte geliefert werden sollen, in Abhängigkeit von Folgendem: (i) der Zahl an mobilen Endgeräten in den ausgewählten mindestens zwei mobilen Endgeräten und (ii) der ersten Menge an Zustandsdaten, wobei die zweite Menge kleiner als oder gleich der ersten Menge ist, und
- ein Mittel zum Empfangen der zweiten Menge (1104) an Zustandsdaten, die von dem mindestens einen mobilen Endgerät geliefert werden.

9. Vorrichtung nach Anspruch 8, **dadurch gekenn-**

**EP 2 067 368 B1**

**zeichnet, dass** das Mittel zum Bestimmen einer ersten Menge (1102) an Zustandsdaten Folgendes umfasst:

- ein Mittel zum Bestimmen einer dritten Menge an Zustandsdaten, die für jeden Kommunikationskanal erfasst werden sollen,
- ein Mittel zum Bestimmen einer Menge an Kommunikationskanälen, für die Zustandsdaten erfasst werden sollen, und
- ein Mittel zum Bestimmen einer ersten Menge an Zustandsdaten durch das Multiplizieren der dritten Menge mit der Menge an Kommunikationskanälen, für die Zustandsdaten erfasst werden sollen.

**10.** Vorrichtung nach entweder Anspruch 8 oder Anspruch 9, **dadurch gekennzeichnet, dass** das Mittel zum Bestimmens einer ersten Menge (1102) an Zustandsdaten eingerichtet ist zum Bestimmen der ersten Menge an Zustandsdaten in Abhängigkeit von der Zahl an mobilen Endgeräten, an die Daten von der Basisstation übertragen werden sollen oder die mit der Basisstation assoziiert sind.

**11.** Vorrichtung nach mindestens einem der Ansprüche 8 bis 10, **gekennzeichnet durch** ein Mittel zum Übertragen der ersten Menge (1104) an Zustandsdaten von der Basisstation an mindestens ein mobiles Endgerät, das mit der Basisstation assoziiert ist.

**12.** Vorrichtung nach mindestens einem der Ansprüche 8 bis 11, **dadurch gekennzeichnet, dass** das Mittel zum Auswählen (1103) von mindestens zwei mobilen Endgeräten, die mit der Basisstation assoziiert sind, eingerichtet ist für das Vornehmen der Auswahl von mindestens zwei mobilen Endgeräten, die mit der Basisstation assoziiert sind, in Abhängigkeit von den mobilen Endgeräten, an die Daten übertragen werden sollen.

**13.** Vorrichtung nach mindestens einem der Ansprüche 8 bis 12, **gekennzeichnet durch** ein Mittel zum Übertragen des Ergebnisses der Auswahl (1104) in einem Mittel zum Auswählen von mindestens zwei mobilen Endgeräten, die mit der Basisstation assoziiert sind, von der Basisstation zu mindestens einem mobilen Endgerät, das mit der Basisstation assoziiert ist.

**14.** Vorrichtung nach mindestens einem der Ansprüche 8 bis 13, **dadurch gekennzeichnet, dass** das Mittel zum Auswählen (1103) von mindestens zwei mobilen Endgeräten, die mit der Basisstation assoziiert sind, zum Auswählen einer Vielzahl von mobilen Endgeräten eingerichtet ist.

**15.** Computerprogrammprodukt, das ein computerlesbares Medium und ein darin gespeichertes Computerprogramm umfasst, wobei das Computerprogramm in Form einer Sequenz von Zuständen gespeichert ist, die Befehlen entspricht, die eingerichtet sind, um von einem Datenverarbeitungsmittel einer Datenverarbeitungsanordnung verarbeitet zu werden, sodass eine Vorrichtung nach mindestens einem der Ansprüche 8 bis 14 gebildet wird oder das Verfahren nach mindestens einem der Ansprüche 1 bis 7 ausgeführt wird.

**Revendications**

**1.** Procédé de réception de données de statut relatives à un statut d'au moins un canal de communication d'un groupe de canaux de communication multiplexés, qui sont multiplexés par rapport à au moins une ressource du groupe de ressources constitué d'une fréquence, d'un temps, d'un espace et d'un code, entre une station de base (101) et un ou plusieurs terminaux mobiles (102), le procédé comprenant les étapes consistant à :

- déterminer (401 ; 504), par la station de base, au moins deux terminaux mobiles associés à la station de base ;
- déterminer une première quantité de données de statut (402 ; 502) à détecter pour contrôler une transmission de données par l'intermédiaire de l'au moins un canal de communication ;
- déterminer une deuxième quantité de données de statut (403 ; 506) à fournir par au moins un terminal mobile parmi les au moins deux terminaux mobiles déterminés en fonction : (i) du nombre de terminaux mobiles associés à la station de base parmi les au moins deux terminaux mobiles déterminés, et (ii) de la première quantité de données de statut, la deuxième quantité étant inférieure ou égale à la première quantité ; et
- recevoir, par la station de base, la deuxième quantité (406 ; 509) de données de statut fournies par l'au moins un terminal mobile.

**2.** Procédé selon la revendication 1, **caractérisé en ce que** l'étape consistant à déterminer une première quantité de données de statut (402 ; 502) comprend les étapes consistant à déterminer une troisième quantité de données de statut qui doit être détectée pour chaque canal de communication, déterminer une quantité de canaux de communication pour lesquels des données de statut doivent être détectées, et déterminer une première quantité de données de statut en multipliant la troisième quantité par la quantité de canaux de communication pour lesquels des données de statut doivent être détectées.

14

**3.** Procédé selon la revendication 1 ou 2, **caractérisé en ce que**, à l'étape consistant à déterminer une première quantité de données de statut (402 ; 502), la première quantité de données de statut est déterminée en fonction du nombre de terminaux mobiles auxquels des données doivent être transmises par la station de base ou qui sont associés à la station de base.

**4.** Procédé selon au moins une des revendications précédentes, **caractérisé par** l'étape consistant à transmettre la première quantité de données de statut (505) de la station de base à au moins un terminal mobile associé à la station de base.

**5.** Procédé selon au moins une des revendications précédentes, **caractérisé en ce que**, à l'étape consistant à déterminer (401 ; 504) au moins deux terminaux mobiles associés à la station de base, au moins un terminal mobile associé à la station de base est sélectionné en fonction des terminaux mobiles auxquels des données doivent être transmises.

**6.** Procédé selon au moins une des revendications précédentes, **caractérisé par** l'étape consistant à transmettre le résultat de la sélection (505), à l'étape consistant à déterminer au moins deux terminaux mobiles associés à la station de base, de la station de base à au moins un terminal mobile associé à la station de base.

**7.** Procédé selon au moins une des revendications précédentes, **caractérisé en ce que**, à l'étape consistant à déterminer (401 ; 504) au moins deux terminaux mobiles associés à la station de base, une pluralité de terminaux mobiles est sélectionnée.

**8.** Appareil de réception de données de statut relatives à un statut d'au moins un canal de communication d'un groupe de canaux de communication multiplexés, qui sont multiplexés par rapport à au moins une ressource du groupe de ressources constitué d'une fréquence, d'un temps, d'un espace et d'un code, entre une station de base (101) et un ou plusieurs terminaux mobiles (102, 103), l'appareil comprenant :

- un moyen permettant de sélectionner (1103) au moins deux terminaux mobiles associés à la station de base ;
- un moyen permettant de déterminer une première quantité (1102) de données de statut à détecter pour contrôler une transmission de données par l'intermédiaire de l'au moins un canal de communication ;
- un moyen permettant de déterminer une deuxième quantité (1105, 1106) de données de statut à fournir par au moins un terminal mobile parmi les au moins deux terminaux mobiles sélectionnés en fonction : (i) du nombre de terminaux mobiles parmi les au moins deux terminaux mobiles sélectionnés, et (ii) de la première quantité de données de statut, la deuxième quantité étant inférieure ou égale à la première quantité ; et
- un moyen permettant de recevoir la deuxième quantité (1104) de données de statut fournies par l'au moins un terminal mobile.

**9.** Appareil selon la revendication 8, **caractérisé en ce que** le moyen permettant de déterminer une première quantité (1102) de données de statut comprend :

- un moyen permettant de déterminer une troisième quantité de données de statut qui doit être détectée pour chaque canal de communication ;
- un moyen permettant de déterminer une quantité de canaux de communication pour lesquels des données de statut doivent être détectées ; et
- un moyen permettant de déterminer une première quantité de données de statut en multipliant la troisième quantité par la quantité de canaux de communication pour lesquels des données de statut doivent être détectées.

**10.** Appareil selon la revendication 8 ou 9, **caractérisé en ce que** le moyen permettant de déterminer une première quantité (1102) de données de statut est configuré pour déterminer la première quantité de données de statut en fonction du nombre de terminaux mobiles auxquels des données doivent être transmises par la station de base ou qui sont associés à la station de base.

**11.** Appareil selon au moins une des revendications 8 à 10, **caractérisé par** un moyen permettant de transmettre la première quantité (1104) de données de statut de la station de base à au moins un terminal mobile associé à la station de base.

**12.** Appareil selon au moins une des revendications 8 à 11, **caractérisé en ce que** le moyen permettant de sélectionner (1103) au moins deux terminaux mobiles associés à la station de base est configuré pour réaliser la sélection d'au moins deux terminaux mobiles associés à la station de base en fonction des terminaux mobiles auxquels des données doivent être transmises.

**13.** Appareil selon au moins une des revendications 8 à 12, **caractérisé par** un moyen permettant de transmettre le résultat de la sélection (1104), dans le moyen permettant de sélectionner au moins deux terminaux mobiles associés à la station de base, de la station de base à au moins un terminal mobile associé à la station de base.

**14.** Appareil selon au moins une des revendications 8 à 13, **caractérisé en ce que** le moyen permettant de sélectionner (1103) au moins deux terminaux mobiles associés à la station de base est configuré pour sélectionner une pluralité de terminaux mobiles.

**15.** Produit de programme informatique qui comprend un support lisible par ordinateur et un programme informatique stocké sur celui-ci, le programme informatique étant stocké sous la forme d'une séquence de statuts correspondant à des commandes configurées pour être traitées par un moyen de traitement de données d'un dispositif de traitement de données, de manière à former un appareil selon au moins une des revendications 8 à 14 ou à réaliser le procédé selon au moins une des revendications 1 à 7.

FIG 1

FIG 2

FIG 3

First quantity of status
data T
(transmission volume)

301

303

304

302

Number of mobile
terminals

0  1        5        10        15        20

FIG 4

Random selection of MTs — 401

Reading of a first quantity of status data (T) from memory — 402

Determinaton by the BS of the second quantities Xu to be delivered by the selected MTs — 403

Sending of a list of second quantities Xu to the selected MTs — 404

Detection of the second quantities Xu at the MTs — 405

Transmission of the second quantity of detected status data from the MTs to the BS — 406

## FIG 5

Establishment of the number of MTs
from which status data are to be demanded — 501

Determination of a first quantity of
status data (T(#MT)) — 502

Detection of the data volume and the QoS
requirements of the data to be transmitted — 503

Determination of the selection values bu — 504

Sending of a list of selection values bu
and T(#MT) to all associated MTs — 505

Determination at the MTs of the second
quantities Xu to be delivered — 506

Detection of the second quantities Xu
of status data — 507

Determination of response
channels — 508

Transmission of the second quantities of detected
status data from the MTs to the BS via determined — 509
response channels

## FIG 6

| MT No. | 4 | 2 | 7 | 3 | 1 | 6 | 5 | (601) |
|---|---|---|---|---|---|---|---|---|
| $X_u$ | 4 | 4 | 0 | 4 | 4 | 0 | 0 | (602) |

(603, 604, 605, 606)

## FIG 7

| T | 16 | | | | | | | (701) |
|---|---|---|---|---|---|---|---|---|
| MT No. | 4 | 2 | 7 | 3 | 1 | 6 | 5 | (702) |
| $b_u$ | 1 | 1 | 0 | 1 | 1 | 0 | 0 | (703) |

(704, 705, 706, 707)

## FIG 8

| T | 16 | | | | | | | (701) |
|---|---|---|---|---|---|---|---|---|
| MT No. | 4 | 2 | 7 | 3 | 1 | 6 | 5 | (702) |
| $b_u$ | 1 | 1 | 0 | 1 | 1 | 0 | 0 | (703) |
| $X_u$ | 4 | 4 | 0 | 4 | 4 | 0 | 0 | (801) |
| Response channel | 1 | 2 | | 3 | 4 | | | (802) |

(803, 804, 805, 806)

21

## FIG 9

| T | 32 ~901 | | | | | | | |
|---|---|---|---|---|---|---|---|---|
| MT No. | 4 | 5 | 7 | 6 | 1 | 3 | 2 | 8 | ~902 |
| $b_u$ | 0 | 3 | 0 | 0 | 4 | 1 | 0 | 0 | ~903 |

904         905   906

## FIG 10

| T | 32 ~901 | | | | | | | |
|---|---|---|---|---|---|---|---|---|
| MT No. | 4 | 5 | 7 | 6 | 1 | 3 | 2 | 8 | ~902 |
| $b_u$ | 0 | 3 | 0 | 0 | 4 | 1 | 0 | 0 | ~903 |
| $X_u$ | 0 | 12 | 0 | 0 | 16 | 4 | 0 | 0 | ~1001 |
| Response channel | | 1-12 | | | 13-28 | 29-32 | | | ~1002 |

1003        1004   1005

FIG 11

1101

102

101

1105

1102

Means for
determining
a second quantity

Means for
determining
a first quantity

Means for
detecting
the second quantity

1104

Means for
transmitting
data

1107

1106

Means for
determining
a second quantity

Means for
detecting
the second quantity

Means for
selecting MTs

1108

1103

103

**EP 2 067 368 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2415870 A

- US 20050281226 A